# FASCICULE DE BREVET EUROPEEN

(11) **EP 3 123 017 B1**
(45) Date de publication et mention de la délivrance du brevet: **27.06.2018**
(21) Numéro de dépôt: 15717550.6
(22) Date de dépôt: 20.03.2015
(51) Int. Cl.: F02C 7/27, F01D 19/00, F02C 6/14

(54) **DISPOSITIF HYDRAULIQUE DE DÉMARRAGE D'URGENCE D'UN TURBOMOTEUR, SYSTÈME PROPULSIF D'UN HÉLICOPTÈRE MULTI-MOTEUR ÉQUIPÉ D'UN TEL DISPOSITIF ET HÉLICOPTÈRE CORRESPONDANT**
HYDRAULISCHE VORRICHTUNG ZUM NOTSTARTEN EINER GASTURBINE, ANTRIEBSSYSTEM EINES MEHRMOTORIGEN HUBSCHRAUBERS MIT EINER DERARTIGEN VORRICHTUNG UND ENTSPRECHENDER HUBSCHRAUBER
HYDRAULIC DEVICE FOR EMERGENCY STARTING A TURBINE ENGINE, PROPULSION SYSTEM OF A MULTI-ENGINE HELICOPTER PROVIDED WITH ONE SUCH DEVICE, AND CORRESPONDING HELICOPTER

(30) Priorité: 27.03.2014 FR 1452643
(43) Date de publication de la demande: 01.02.2017
(73) Titulaire: Safran Helicopter Engines, 64510 Bordes (FR)
(72) Inventeur: THIRIET, Romain, F-64110 Jurancon (FR); MOINE, Bertrand, F-64290 Gan (FR); SERGHINE, Camel, F-64510 Boeil-bezing (FR); POREL, François, F-54540 Sainte Pole (FR)
(74) Mandataire: Gevers & Orès
(86) Numéro de dépôt international: PCT/FR2015/050696
(87) Numéro de publication internationale: WO 2015/145040

(56) Documents cités:
- WO-A2-2008/139096
- DE-A1-102010 041 144
- GB-A- 1 032 392
- US-A- 2 446 691

## Description

### 1. Domaine technique de l'invention

L'invention concerne un dispositif hydraulique autonome de démarrage d'urgence d'un turbomoteur. L'invention concerne aussi une architecture d'un système propulsif d'un hélicoptère multi-moteur -en particulier bimoteur ou trimoteur- équipé d'au moins un tel dispositif de démarrage d'urgence. L'invention concerne également un hélicoptère comprenant un système propulsif présentant une telle architecture.

### 2. Arrière-plan technologique

Un hélicoptère bimoteur ou trimoteur présente de manière connue un système propulsif comprenant deux ou trois turbomoteurs, chaque turbomoteur comprenant un générateur de gaz et une turbine libre entrainée en rotation par le générateur de gaz, et solidaire d'un arbre de sortie. L'arbre de sortie de chaque turbine libre est adapté pour mettre en mouvement une boite de transmission de puissance, qui entraîne elle-même le rotor de l'hélicoptère équipé de pales à pas variable.

Il est connu que les turbomoteurs de l'hélicoptère fonctionnent à des régimes qui dépendent des conditions de vol de l'hélicoptère. Dans tout le texte qui suit, un hélicoptère est dit en situation de vol de croisière lorsqu'il évolue dans des conditions normales, au cours de toutes les phases du vol, hors phases transitoires de décollage, de montée, d'atterrissage ou de vol stationnaire. Dans tout le texte qui suit, un hélicoptère est dit en situation critique de vol lorsqu'il est nécessaire qu'il dispose de la puissance totale installée, c'est-à-dire dans les phases transitoires de décollage, de montée, d'atterrissage et de régime dans lequel un des turbomoteurs est défaillant, désigné par l'acronyme anglais OEI

### (One Engine Inoperative).

Il est connu que lorsque l'hélicoptère est en situation de vol de croisière, les turbomoteurs fonctionnent à des niveaux de puissance faibles, inférieurs à leur puissance maximale continue. Ces faibles niveaux de puissance entraînent une consommation spécifique (ci-après, *Cs*) définie comme le rapport entre la consommation horaire de carburant par la chambre de combustion du turbomoteur et la puissance mécanique fournie par ce turbomoteur, supérieure de l'ordre de 30% à la Cs de la puissance maximale de décollage, et donc une surconsommation en carburant en vol de croisière.

En outre, les turbomoteurs d'un hélicoptère sont conçus de manière surdimensionnée pour pouvoir maintenir l'hélicoptère en vol en cas de panne de l'un des moteurs. Cette situation de vol correspond au régime OEI décrit ci-dessus. Cette situation de vol survient suite à la perte d'un moteur et se traduit par le fait que chaque moteur en fonctionnement fournit une puissance bien au-delà de sa puissance nominale pour permettre à l'hélicoptère de faire face à une situation périlleuse, puis de pouvoir poursuivre son vol.

D'autre part, les turbomoteurs sont également surdimensionnés pour pouvoir assurer le vol dans tout le domaine de vol spécifié par l'avionneur et notamment le vol à des altitudes élevées et par temps chaud. Ces points de vol, très contraignants, notamment lorsque l'hélicoptère a une masse proche de sa masse maximale de décollage, ne sont rencontrés que dans certains cas d'utilisation.

Ces turbomoteurs surdimensionnés sont pénalisants en termes de masse et de consommation de carburant. Afin de réduire cette consommation en vol de croisière, il est envisagé d'arrêter en vol l'un des turbomoteurs et de le placer en régime, dit de veille. Le ou les moteurs actifs fonctionnent alors à des niveaux de puissance plus élevés pour fournir toute la puissance nécessaire et donc à des niveaux de Cs plus favorables.

Les demandeurs ont proposé dans les demandes FR1151717 et FR1359766, des procédés d'optimisation de la consommation spécifique des turbomoteurs d'un hélicoptère par la possibilité de placer au moins un turbomoteur dans un régime de puissance stabilisée, dit continu, et au moins un turbomoteur dans un régime de veille particulier duquel il peut sortir de manière urgente ou normale, selon les besoins. Une sortie du régime de veille est dite normale lorsqu'un changement de situation de vol impose l'activation du turbomoteur en veille, par exemple lorsque l'hélicoptère va passer d'une situation de vol de croisière à une phase d'atterrissage. Une telle sortie de veille normale s'effectue sur une durée de 10s à 1 min. Une sortie du régime de veille est dite urgente lorsqu'une panne ou un déficit de puissance du moteur actif intervient ou que les conditions de vol deviennent soudainement difficiles. Une telle sortie de veille d'urgence s'effectue sur une durée inférieure à 10s.

La sortie d'un régime de veille d'un turbomoteur et le passage d'une phase de vol économique à une phase de vol classique est obtenu par exemple par le biais d'un pack de redémarrage du turbomoteur associé à un dispositif de stockage d'énergie tel qu'un stockage électrochimique du type batterie Li-Ion ou un stockage électrostatique du type surcapacité, qui permet de fournir au turbomoteur l'énergie nécessaire pour redémarrer et atteindre rapidement un régime de fonctionnement nominal.

Un tel pack de redémarrage d'urgence du turbomoteur en veille présente l'inconvénient d'alourdir sensiblement le poids total du turbomoteur. Le gain en consommation de carburant obtenu par la mise en veille du turbomoteur est donc en partie perdu par le surpoids occasionné par le dispositif de redémarrage et le dispositif de stockage d'énergie associé, en particulier lorsque chaque turbomoteur est équipé d'un tel dispositif de redémarrage d'urgence.

En outre, ces composants électrotechniques peuvent être dépendants de l'architecture électrique de l'hélicoptère sur lequel ils sont montés.

Les inventeurs ont donc cherché à concilier des problèmes a priori incompatibles que sont la possibilité de placer l'hélicoptère en phase de vol économique, c'est-à-dire de mettre au moins un turbomoteur en veille, sans générer un surpoids trop important de l'ensemble du système propulsif, mais tout en permettant une sortie d'urgence du régime de veille.

En d'autres termes, les inventeurs ont cherché à proposer un nouveau dispositif de redémarrage d'urgence d'un turbomoteur et une architecture nouvelle du système propulsif d'un hélicoptère bimoteur ou trimoteur.

L'état de l'art comprend également les documents GB-A-1 032 392 et WO-A2-2008/139096.

### 3. Objectifs de l'invention

L'invention vise à fournir un dispositif de démarrage rapide d'un turbomoteur qui pallie les inconvénients des solutions antérieures.

L'invention vise aussi à fournir un système propulsif d'un hélicoptère multi-moteur.

L'invention vise aussi à fournir un système propulsif d'un hélicoptère multi-moteur qui autorise la mise en veille d'un turbomoteur et son redémarrage rapide.

L'invention vise aussi à fournir, dans au moins un mode de réalisation de l'invention, un système propulsif qui présente une masse et un volume non rédhibitoires pour pouvoir être embarquée dans un hélicoptère.

L'invention vise aussi à fournir, dans au moins un mode de réalisation de l'invention, un système propulsif qui présente un coût inférieur aux architectures de l'art antérieur à performances égales.

L'invention vise aussi à fournir un procédé de démarrage rapide d'un turbomoteur.

### 4. Exposé de l'invention

Pour ce faire, l'invention concerne un dispositif de démarrage d'urgence pour un turbomoteur d'un hélicoptère comprenant:
- un moteur hydraulique adapté pour être relié mécaniquement audit turbomoteur et adapté pour l'entraîner en rotation pour permettre son démarrage,
- un stockeur hydropneumatique relié audit moteur hydraulique par le biais d'un circuit hydraulique d'alimentation en liquide sous pression dudit moteur hydraulique, caractérisé en ce que le dispositif comprend:
   - une vanne hydraulique à ouverture rapide commandée agencée sur le circuit hydraulique entre ledit stockeur et ledit moteur hydraulique et adaptée pour être placée sur commande au moins dans une position ouverte dans laquelle le liquide peut alimenter ledit moteur hydraulique, permettant ainsi un démarrage dudit turbomoteur lorsque le dispositif est utilisé avec ledit turbomoteur, ou dans une position fermée dans laquelle ledit moteur hydraulique n'est plus alimenté en liquide sous pression,
- une bâche de récupération de liquide reliée audit moteur hydraulique par le biais d'un clapet de purge.

Un dispositif de démarrage d'un turbomoteur selon l'invention prévoit donc un dispositif hydraulique - de préférence complètement indépendant du réseau hydraulique de l'hélicoptère sur lequel un tel turbomoteur est destiné à être monté - pour assurer le démarrage du turbomoteur.

Un turbomoteur comprend de manière connue un générateur de gaz et une turbine libre alimentée par le générateur de gaz et reliée à une boîte de transmission de puissance. De préférence, un dispositif de démarrage selon l'invention prévoit que le générateur de gaz du turbomoteur est entraîné en rotation par le moteur hydraulique adapté pour transformer la puissance hydraulique du liquide sous pression qui alimente le moteur en une puissance mécanique d'entraînement du générateur de gaz.

L'alimentation en liquide du moteur hydraulique est réalisée par la coopération d'un stockeur hydropneumatique et d'une vanne à ouverture rapide commandée.

Un tel dispositif de démarrage est donc indépendant du réseau électrique de l'hélicoptère et ne nécessite pas de batteries de stockage volumineuses. La solution proposée permet donc d'assurer un démarrage rapide d'un turbomoteur, en particulier un turbomoteur placé en un régime de veille, sans générer des problèmes d'encombrement, de masse et de coût.

En outre, un dispositif selon l'invention est simple d'utilisation et peut-être testé sur banc avant son intégration sur un hélicoptère.

L'ensemble formé de la bâche de récupération et du clapet de purge permet une expulsion du liquide du circuit hydraulique dès que la pression du liquide dans ce circuit dépasse un seuil prédéterminé, et une récupération de ce liquide expulsé dans la bâche de récupération. Le clapet de purge définit le seuil prédéterminé à partir duquel le liquide est expulsé du circuit hydraulique.

Avantageusement et selon l'invention, le stockeur hydropneumatique est choisi dans le groupe comprenant un stockeur à vessie, un stockeur à membrane et un stockeur à piston.

Un tel stockeur comprend par exemple une enceinte métallique ou en matériaux composites, un capteur de pression qui permet d'assurer la disponibilité du stockeur, une soupape de sécurité, un réservoir de gaz du type azote, hélium ou argon et un réservoir d'huile faisant office de liquide d'alimentation du circuit hydraulique.

Avantageusement et selon l'invention, le moteur hydraulique comprend un arbre moteur relié mécaniquement à un arbre, dit arbre de boîte, d'une boîte d'accessoires dudit turbomoteur par le biais de moyens d'engrènement comprenant au moins une roue libre portée par ledit arbre moteur.

Une boîte d'accessoires d'un turbomoteur permet l'entraînement des servitudes nécessaires au fonctionnement du générateur de gaz du turbomoteur et d'équipements de l'hélicoptère, comme par exemple les dispositifs de conditionnement d'air. Selon cette variante, le moteur hydraulique est directement intégré sur cette boîte d'accessoires, ce qui permet d'une part de faciliter son installation et interconnexion avec le générateur de gaz du turbomoteur, et d'autre part, de fournir, si nécessaire, une partie de la puissance nécessaire à l'entraînement des servitudes et/ou alimentation des équipements de l'hélicoptère.

La présence de la roue libre permet d'éviter un entraînement spontané du moteur hydraulique par la boîte d'accessoires lorsque le générateur de gaz fournit de la puissance mécanique.

Avantageusement et selon cette variante, lesdits moyens d'engrènement comprennent en outre :
- un premier étage d'engrènement comprenant ledit arbre moteur portant un pignon principal monté sur ladite roue libre et un pignon, dit pignon de pompage,
- un deuxième étage d'engrènement comprenant ledit arbre de boîte portant un pignon principal engrené par ledit pignon principal dudit premier étage d'engrènement, et un pignon, dit pignon de pompage,
- un étage intermédiaire d'engrènement comprenant un arbre intermédiaire portant un pignon de liaison, mobile entre une position embrayée dans laquelle il est engrené conjointement auxdits pignons de pompage des premier et deuxième étages d'engrènement, et une position débrayée, dans laquelle il n'interfère pas avec lesdits pignons de pompage.

Un dispositif selon cette variante permet un fonctionnement réversible du dispositif. En particulier, il permet non seulement d'assurer un démarrage du turbomoteur par le moteur hydraulique, mais également de recharger le stockeur hydropneumatique en utilisant le moteur hydraulique comme une pompe hydraulique. Pour ce faire, un étage intermédiaire comprend un pignon de liaison qui est adapté pour être déplacé d'une position dans laquelle il n'est accouplé ni à l'arbre moteur, ni à l'arbre de boîte (le moteur hydraulique fonctionne alors comme un moteur et fournit de la puissance mécanique pour entraîner l'arbre de la boîte d'accessoires), vers une position dans laquelle il est accouplé conjointement à l'arbre moteur et à l'arbre de boîte (le moteur hydraulique se comporte alors comme une pompe hydraulique et l'arbre de la boîte d'accessoires entraine en rotation l'arbre moteur par le biais de l'arbre intermédiaire. Cet arbre intermédiaire, agencé entre l'arbre de boite et l'arbre moteur, inverse le sens de rotation de l'arbre moteur par rapport à la première position, conférant ainsi au moteur hydraulique une fonction de pompe hydraulique).

Lorsque le moteur hydraulique est utilisé comme pompe hydraulique pour assurer la recharge du stockeur hydropneumatique, il est utile de prévoir un dispositif de pilotage du clapet de purge pour inhiber son fonctionnement anti-retour.

L'invention concerne également un système propulsif d'un hélicoptère multi-moteur comprenant des turbomoteurs reliés à une boite de transmission de puissance, caractérisé en ce qu'il comprend :
- au moins un turbomoteur parmi lesdits turbomoteurs, dit turbomoteur hybride, apte à fonctionner dans au moins un régime de veille au cours d'un vol stabilisé de l'hélicoptère, les autres turbomoteurs fonctionnant seuls au cours de ce vol stabilisé,
- au moins un dispositif de démarrage d'urgence pour un turbomoteur selon l'invention adapté pour pouvoir sortir ce turbomoteur hybride dudit régime de veille et atteindre un régime, dit régime nominal, dans lequel il fournit une puissance mécanique à ladite boite de transmission de puissance.

Un dispositif de démarrage d'un turbomoteur selon l'invention est particulièrement destiné à être intégré dans un système propulsif d'un hélicoptère multi-moteur comprenant au moins un turbomoteur apte à être mis en veille. Le dispositif de démarrage hydraulique permet d'assurer le redémarrage d'urgence du turbomoteur en veille en cas de besoin.

Un turbomoteur hybride est un turbomoteur configuré pour pouvoir être mis, sur commande et volontairement, dans au moins un régime de veille prédéterminé, duquel il peut sortir de manière normale ou rapide (aussi dite urgente). Un turbomoteur ne peut être en veille qu'au cours d'un vol stabilisé de l'hélicoptère, c'est-à-dire, hors panne d'un turbomoteur de l'hélicoptère, au cours d'une situation de vol de croisière, lorsqu'il évolue dans des conditions normales. La sortie du régime de veille consiste à passer le turbomoteur en mode accélération du générateur de gaz par un entrainement compatible avec le mode de sortie imposée par les conditions (sortie de veille normale ou sortie de veille rapide (aussi dite d'urgence).

Avantageusement, un système propulsif selon une variante de l'invention comprend deux turbomoteurs hybrides et deux dispositifs de démarrage d'urgence selon l'invention, chaque turbomoteur hybride étant associé à un dispositif de redémarrage.

Selon cette variante, le système présente une alimentation hydraulique distincte pour chaque moteur hydraulique de redémarrage de chaque turbomoteur hybride.

Avantageusement, un système selon une autre variante de l'invention comprend deux turbomoteurs hybrides et un unique dispositif de redémarrage selon l'invention qui comprend deux moteurs hydrauliques reliés respectivement à chaque turbomoteur hybride, ladite vanne hydraulique étant une vanne bistable commandée pour orienter le fluide vers ledit moteur hydraulique du turbomoteur hybride à redémarrer.

Selon cette variante, la vanne bistable est commandée pour orienter le liquide du circuit hydraulique vers le turbomoteur hybride qui doit être redémarré.

L'invention concerne également un hélicoptère comprenant un système propulsif selon l'invention.

L'invention concerne également un procédé de démarrage d'urgence d'un turbomoteur d'un hélicoptère qui n'est pas couvert par les revendications et qui comprend :
- une étape de commande d'ouverture d'une vanne hydraulique agencée sur un circuit hydraulique entre un stockeur hydropneumatique et un moteur hydraulique relié mécaniquement audit turbomoteur,
- une étape de cheminement du liquide prélevé vers ledit moteur hydraulique,
- une étape de transformation par ledit moteur hydraulique de la puissance hydraulique du liquide sous pression en puissance mécanique pour entraîner le démarrage du turbomoteur.

L'invention concerne également un dispositif de démarrage d'un turbomoteur, un système propulsif d'un hélicoptère multi-moteurs, un hélicoptère équipé d'un système propulsif, et un procédé de démarrage d'un turbomoteur, caractérisés en combinaison par tout ou partie des caractéristiques mentionnées ci-dessus ou ci-après.

### 5. Liste des figures

D'autres buts, caractéristiques et avantages de l'invention apparaîtront à la lecture de la description suivante donnée à titre uniquement non limitatif et qui se réfère aux figures annexées dans lesquelles :
- la figure 1 est une vue schématique d'un dispositif de démarrage d'un turbomoteur selon un mode de réalisation de l'invention,
- la figure 2 est une vue schématique d'une architecture d'un système propulsif d'un hélicoptère selon un mode de réalisation de l'invention,
- la figure 3 est une vue schématique d'une architecture d'un système propulsif d'un hélicoptère selon un autre mode de réalisation de l'invention,
- la figure 4 est une vue schématique de moyens d'engrènement d'un dispositif de démarrage selon un mode de réalisation de l'invention dans une position dans laquelle le dispositif fonctionne en mode moteur,
- la figure 5 est une vue schématique de moyens d'engrènement d'un dispositif de démarrage selon un mode de réalisation de l'invention dans une position dans laquelle le dispositif fonctionne en mode de pompe.

### 6. Description détaillée d'un mode de réalisation de l'invention

Sur les figures, les échelles et les proportions ne sont pas respectées et ce, à des fins d'illustration et de clarté.

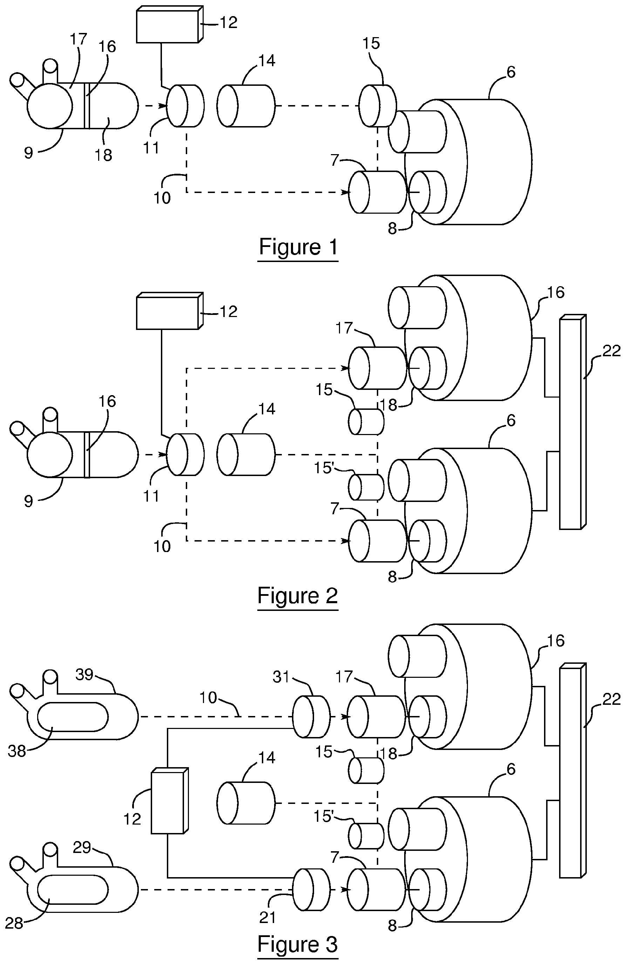

La figure 1 est une vue schématique d'un dispositif de démarrage d'un turbomoteur 6 selon un mode de réalisation de l'invention.

Un tel dispositif comprend un moteur 7 hydraulique relié mécaniquement au turbomoteur 6 par le biais d'une roue libre 8. Ce moteur 7 hydraulique peut être un moteur à pistons axiaux ou radiaux. Il a pour fonction de transformer la puissance hydraulique qu'il reçoit en une puissance mécanique permettant d'entraîner le démarrage du turbomoteur.

Ce moteur 7 hydraulique est de préférence monté sur le turbomoteur 6 par le bais d'une boîte d'accessoires, non représentée sur la figure 1.

Le dispositif comprend en outre un stockeur 9 hydropneumatique relié au moteur 7 hydraulique par le biais d'un circuit 10 hydraulique d'alimentation en liquide sous pression de ce moteur 7 hydraulique. Ce stockeur 9 hydropneumatique est, selon le mode de réalisation de la figure 1, un stockeur à piston 16 monobloc. Le piston 16 délimite un compartiment 17 de gaz à volume variable et un compartiment 18 d'huile à volume variable. Le compartiment 17 de gaz est par exemple rempli d'azote, d'hélium ou d'argon. Ce gaz du compartiment 17 de gaz exerce une pression sur le piston 16 mobile vers une augmentation du volume du compartiment 17 de gaz et une diminution du volume du compartiment 18 d'huile. L'huile est donc poussée vers le circuit 10 hydraulique.

L'alimentation du moteur 7 hydraulique est dépendante d'une vanne 11 hydraulique à ouverture rapide, commandée, qui est agencée sur le circuit 10 hydraulique entre le stockeur 9 et le moteur 7 hydraulique.

Cette vanne 11 hydraulique est commandée par un dispositif 12 de commande, qui est de préférence le calculateur de commande du turbomoteur 6, qui permet en outre de définir le régime de fonctionnement du turbomoteur.

Lorsque la vanne 11 est commandée en ouverture, l'huile du compartiment 18 d'huile du stockeur 9 est éjectée vers le moteur 7 hydraulique pour que ce dernier transforme la puissance hydraulique de l'huile reçue en une puissance mécanique en sortie.

Le dispositif de démarrage comprend également une bâche 14 de récupération de liquide relié au moteur 7 hydraulique par le biais d'un clapet 15 de purge. Ce clapet est taré de telle sorte que l'huile est éjectée du circuit 10 dès que la pression dépasse un seuil prédéterminé.

Le dispositif de démarrage de la figure 1 équipe avantageusement une architecture d'un système propulsif d'un hélicoptère bimoteur tel que représenté sur la figure 2.

Selon le mode de réalisation de la figure 2, le système propulsif comprend deux turbomoteurs 6, 16 reliés à une boîte 22 de transmission de puissance, qui entraîne elle-même un rotor de l'hélicoptère (non représenté sur les figures). Chaque turbomoteur est un turbomoteur hybride, apte à être placé dans au moins un régime de veille au cours d'un vol stabilisé de l'hélicoptère, dont il peut ressortir en urgence par le biais d'un dispositif de démarrage selon l'invention. Un turbomoteur comprend de manière connue un générateur de gaz, une chambre de combustion et une turbine libre.

Le régime de veille est par exemple un des régimes de fonctionnement suivant :
- un régime de veille, dit ralenti usuel, dans lequel la chambre de combustion est allumée et l'arbre du générateur de gaz tourne à une vitesse comprise entre 60 et 80% de la vitesse nominale,
- un régime de veille, dit super-ralenti usuel, dans lequel la chambre de combustion est allumée et l'arbre du générateur de gaz tourne à une vitesse comprise entre 20 et 60% de la vitesse nominale,
- un régime de veille, dit super-ralenti assisté, dans lequel la chambre de combustion est allumée et l'arbre du générateur de gaz tourne, assisté mécaniquement, à une vitesse comprise entre 20 et 60% de la vitesse nominale,
- un régime de veille, dit vireur, dans lequel la chambre de combustion est éteinte et l'arbre du générateur de gaz tourne, assisté mécaniquement, à une vitesse comprise entre 5 et 20% de la vitesse nominale,
- un régime de veille, dit d'arrêt, dans lequel la chambre de combustion est éteinte et l'arbre du générateur de gaz est à l'arrêt complet.

Le dispositif de démarrage comprend, en plus des éléments décrits en lien avec la figure 1, un moteur 17 hydraulique relié au turbomoteur 16 par le biais d'une roue libre 18. En outre, le circuit 10 hydraulique s'étend du stockeur 9 hydropneumatique jusqu'au moteur 17 hydraulique et au moteur 7 hydraulique.

La vanne 11 commandée est, selon ce mode de réalisation, une vanne trois voies adaptée pour permettre, sur commande, soit l'alimentation du moteur 17 hydraulique lié au turbomoteur 16, soit l'alimentation du moteur 7 hydraulique du turbomoteur 6. La commande est fonction du turbomoteur en veille devant sortir en urgence de son régime de veille.

Le principe de fonctionnement du dispositif de démarrage de cette architecture est, pour chaque turbomoteur 6, 16, identique à celui décrit en lien avec la figure 1.

La figure 3 est un système propulsif selon un autre mode de réalisation de l'invention. Selon ce mode de réalisation, un dispositif de démarrage distinct est prévu pour chaque turbomoteur. En d'autres termes, un stockeur 29, 39 hydropneumatique est associé à chaque moteur 7, 17 hydraulique et une vanne 21, 31 est associée à chaque stockeur 29, 39 pour assurer l'alimentation des moteurs et le redémarrage du turbomoteur correspondant. Les vannes 21, 31 sont commandées par l'unité 12 de commande. Seule la bâche 14 de récupération d'huile est commune aux deux dispositifs de démarrage. Selon une autre variante non représentée sur les figures, tous les éléments sont distincts, y compris la bâche 14 de récupération.

Le système propulsif comprend en outre, pour chaque moteur 6, 16, un clapet de purge 15, 15' distinct associé à ce moteur. Chaque clapet 15, 15' de purge présente une double fonction.

D'une part, lorsque le moteur associé est inactif, il permet de maintenir l'huile à l'intérieur de ce dernier. Le clapet de purge permet ainsi d'éviter au moteur de démarrer à vide.

D'autre part, lorsqu'un des deux moteurs démarre, il faut éviter que l'huile de la ligne retour du moteur en fonctionnement ne vienne alimenter l'autre moteur (qui se mettrait sinon lui aussi à tourner). Le clapet de purge permet ainsi dans cette situation de faire office de dispositif anti-retour pour isoler l'autre moteur.

En outre, selon le mode de réalisation de la figure 3, les stockeurs 29, 39 hydropneumatiques sont des stockeurs à vessie. Chaque stockeur 29, 39 comprend une vessie 28, 38 contenant un gaz, du type azote, argon ou hélium agencée au sein de l'enceinte du stockeur rempli d'huile. Une telle vessie joue le rôle du compartiment 17 de gaz du stockeur 9 de la figure 1. Dans un autre mode de réalisation les stockeurs hydropneumatiques sont à membrane ou à piston.

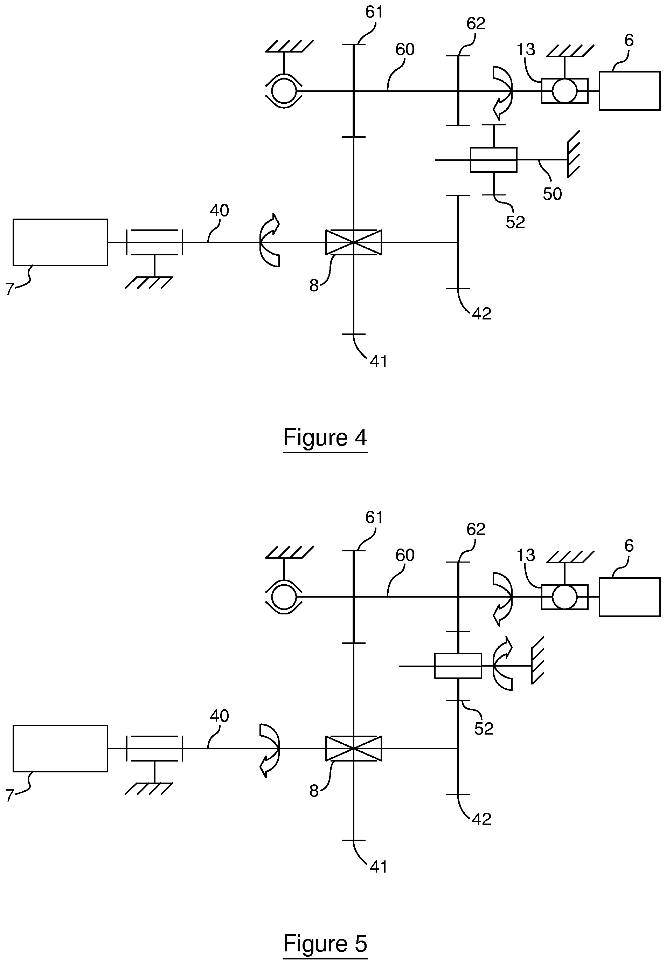

Les figures 4 et 5 sont des vues schématiques d'un mode de réalisation de la liaison mécanique entre le moteur 7 hydraulique et une boîte 13 d'accessoires du turbomoteur 6.

Cette liaison mécanique est formée par des moyens d'engrènement qui comprennent un premier étage d'engrènement formé d'un arbre 40 moteur, qui est l'arbre de sortie du moteur 7 hydraulique, un pignon 41 principal porté par l'arbre 40 moteur et monté sur la roue libre 8, et un pignon 42 de pompage.

Les moyens d'engrènement comprennent en outre un deuxième étage d'engrènement formé par un arbre 60 de boîte, un pignon 61 principal porté par l'arbre 60 de boîte et engrené par le pignon 41 principal du premier étage d'engrènement, et un pignon 62 de pompage porté par l'arbre 60 de boîte.

Les moyens d'engrènement comprennent enfin un étage intermédiaire d'engrènement formé d'un arbre 50 intermédiaire portant un pignon 52 de liaison.

Le pignon 52 de liaison est configuré pour présenter deux positions, une position embrayée représentée par la figure 5 et une position débrayée représentée par la figure 4.

Dans la position embrayée de la figure 5, le pignon est entraîné en rotation par le pignon 62 de pompage porté par l'arbre 60 de la boîte 13 d'accessoires, et il entraîne en rotation le pignon 42 de pompage porté par l'arbre 40 moteur. Ainsi, dans cette position, l'arbre 40 est entraîné en rotation par l'arbre 60 de la boîte d'accessoires. Le moteur 7 hydraulique fonctionne donc en mode de pompe hydraulique, ce qui permet de réinjecter l'huile vers le stockeur hydropneumatique. La roue libre 8 autorise la libre rotation du pignon 41.

Dans la position débrayée de la figure 4, le pignon 52 n'est pas lié mécaniquement avec les pignons 42, 62 de pompage. Aussi, dans cette position, le pignon 41 principal porté par l'arbre 40 moteur entraîne le pignon 61 porté par l'arbre 60 de la boîte d'accessoires. Il s'agit de la position permettant le démarrage rapide du turbomoteur.

Le déplacement du pignon 52 de la position débrayée à la position embrayée peut être assuré par un vérin hydraulique, pneumatique ou électrique, ou par tous moyens équivalents.

Le principe d'utilisation d'un dispositif de démarrage d'un turbomoteur au sein d'une architecture bimoteur tel que représenté par la figure 2 est le suivant :
- lorsque les conditions de vol sont favorables, un ordre est émis pour placer un turbomoteur en veille pour économiser du carburant (régime de veille choisi parmi les régimes de veille cités ci-dessus),
- les calculateurs des turbomoteurs déterminent alors quel turbomoteur peut être mis en veille et ordonnent sa mise en veille (dans toute la suite, on considère que le turbomoteur 6 est mis en veille et que seul le turbomoteur 16 fournit de la puissance à la boîte 22 de transmission de puissance),
- le turbomoteur 6 est en régime de veille (ce régime de veille peut être l'un des régimes de veille susmentionnés, à chambre allumée ou éteinte, assistée mécaniquement ou non),
- au cours du vol, le turbomoteur 16 tombe subitement en panne ou le pilote décide de redémarrer d'urgence le turbomoteur 6 pour une manoeuvre d'urgence particulière,
- la chambre de combustion du turbomoteur 6 est alors rapidement rallumée (cas d'un régime de veille chambre éteinte),
- après un délai prédéterminé, l'unité 12 de commande ordonne l'ouverture de la vanne 11 bistable vers le turbomoteur 6,
- le moteur 7 hydraulique passe alors rapidement (dans un délais inférieur à la seconde) de 0 tr/min à la vitesse d'accostage du générateur de gaz initialement en régime de veille en transformant la puissance hydraulique en une puissance mécanique permettant d'entraîner le générateur de gaz du turbomoteur 6 par le biais de la roue libre 8,
- le moteur 7 hydraulique poursuit l'entraînement du turbomoteur 6 pendant une durée courte, par exemple inférieure à 10s, au cours de laquelle le turbomoteur a atteint son régime d'urgence,
- le démarrage d'urgence du turbomoteur 6 est donc obtenu.

La vitesse d'accostage correspond à la vitesse de veille du générateur de gaz divisée par le rapport de réduction de vitesses entre l'arbre du générateur de gaz et l'entrée de la boite d'accessoires du turbomoteur sur laquelle est monté le démarreur hydraulique.

Un dispositif selon l'invention permet donc de redémarrer rapidement un turbomoteur en veille en ayant recours uniquement à des organes peu coûteux, simples d'utilisation et d'installation, qui peuvent être testés sur bancs et qui permettent une recharge du stockeur hydropneumatique.

L'invention ne se limite pas aux seuls modes de réalisation décrits. En particulier, le système propulsif peut comprendre trois turbomoteurs pour l'équipement d'un hélicoptère trimoteur et l'homme du métier déterminera aisément sur la base des enseignements du présent texte comment adapter les modes de réalisation décrits à un système propulsif multi-moteur, notamment trimoteur.

## Revendications

1. Dispositif de démarrage d'urgence pour un turbomoteur (6) d'un hélicoptère comprenant:
- un moteur (7) hydraulique adapté pour être relié mécaniquement audit turbomoteur (6) et adapté pour l'entraîner en rotation pour permettre son démarrage,
- un stockeur (9) hydropneumatique relié audit moteur (7) hydraulique par le biais d'un circuit (10) hydraulique d'alimentation en liquide sous pression dudit moteur (7) hydraulique, **caractérisé en ce que** le dispositif comprend:
- une vanne (11) hydraulique à ouverture rapide commandée agencée sur le circuit (10) hydraulique entre ledit stockeur (9) et ledit moteur (7) hydraulique et adaptée pour être placée sur commande au moins dans une position ouverte dans laquelle le liquide peut alimenter ledit moteur (7) hydraulique, permettant ainsi un démarrage dudit turbomoteur (6) lorsque le dispositif est utilisé avec ledit turbomoteur (6), ou dans une position fermée dans laquelle ledit moteur (7) hydraulique n'est plus alimenté en liquide sous pression,
- une bâche (14) de récupération de liquide reliée audit moteur (7) hydraulique par le biais d'un clapet (15) de purge

2. Dispositif selon la revendication 1, **caractérisé en ce que** ledit stockeur (9) hydropneumatique est choisi dans le groupe comprenant un stockeur à vessie, un stockeur à membrane et un stockeur à piston.

3. Dispositif selon l'une des revendications 1 ou 2, **caractérisé en ce que** ledit moteur (7) hydraulique comprend un arbre (40) moteur adapté pour être relié mécaniquement à un arbre, dit arbre (60) de boîte, d'une boîte (13) d'accessoires dudit turbomoteur (6) par le biais de moyens d'engrènement comprenant au moins une roue (8) libre portée par ledit arbre (40) moteur.

4. Dispositif selon la revendication 3, **caractérisé en ce que** lesdits moyens d'engrènement comprennent en outre :
- un premier étage d'engrènement comprenant ledit arbre (40) moteur portant un pignon (41) principal monté sur ladite roue (8) libre et un pignon, dit pignon (42) de pompage,
- un deuxième étage d'engrènement comprenant ledit arbre (60) de boîte portant un pignon (61) principal engrené par ledit pignon (41) principal dudit premier étage d'engrènement, et un pignon, dit pignon (62) de pompage,
- un étage intermédiaire d'engrènement comprenant un arbre (50) intermédiaire portant un pignon (52) de liaison mobile entre une position embrayée dans laquelle il est engrené conjointement auxdits pignons (42, 62) de pompage des premier et deuxième étages, et une position débrayée, dans laquelle il n'interfère pas avec lesdits pignons (42, 62) de pompage.

5. Système propulsif pour un hélicoptère multi-moteurs comprenant des turbomoteurs (6, 16) adaptés pour être reliés à une boite (22) de transmission de puissance,
**caractérisé en ce qu'**il comprend :
- au moins un turbomoteur (6, 16) parmi lesdits turbomoteurs, dit turbomoteur hybride, apte à fonctionner dans au moins un régime de veille au cours d'un vol stabilisé de l'hélicoptère, les autres turbomoteurs fonctionnant seuls au cours de ce vol stabilisé,
- au moins un dispositif de démarrage d'urgence pour un turbomoteur selon l'une des revendications 1 à 4 adapté pour pouvoir sortir ce turbomoteur hybride dudit régime de veille et atteindre un régime, dit régime nominal, dans lequel il fournit une puissance mécanique à ladite boite de transmission de puissance.

6. Système selon la revendication 5, **caractérisé en ce qu'**il comprend deux turbomoteurs (6, 16) hybrides et deux dispositifs de démarrage d'urgence selon l'une des revendications 1 à 4, chaque turbomoteur hybride étant associé à un dispositif de redémarrage.

7. Système selon la revendication 5, **caractérisé en ce qu'**il comprend deux turbomoteurs (6, 16) hybrides et un unique dispositif de démarrage selon l'une des revendications 1 à 4 qui comprend deux moteurs (7, 17) hydrauliques reliés respectivement à chaque turbomoteur (6, 16) hybride, ladite vanne (11) hydraulique étant une vanne trois voies commandée pour orienter le fluide vers ledit moteur hydraulique du turbomoteur hybride à redémarrer.

8. Hélicoptère comprenant un système propulsif selon l'une des revendications 5 à 7.

## Patentansprüche

1. Notstartvorrichtung für einen Turbomotor (6) eines Helikopters, umfassend:
- einen Hydraulikmotor (7), der dafür ausgebildet ist, mechanisch mit dem Turbomotor (6) verbunden zu werden, und dafür ausgebildet ist, denselben in Drehung zu versetzen, um seinen Start zu ermöglichen,
- einen hydropneumatischen Speicher (9), der mithilfe eines Hydraulikkreises (10) zum Speisen des Hydraulikmotors (7) mit Druckflüssigkeit mit dem Hydraulikmotor (7) verbunden ist,
**dadurch gekennzeichnet, dass** die Vorrichtung umfasst:
- ein gesteuertes Schnellöffnungs-Hydraulikventil (11), das am Hydraulikkreis (10) zwischen dem Speicher (9) und dem Hydraulikmotor (7) angeordnet und dafür ausgebildet ist, auf Befehl mindestens in eine geöffnete Stellung gesetzt zu werden, in der die Flüssigkeit den Hydraulikmotor (7) speisen kann, womit ein Starten des Turbomotors (6) ermöglicht wird, wenn die Vorrichtung mit dem Turbomotor (6) verwendet wird, oder in eine geschlossene Stellung, in der der Hydraulikmotor (7) nicht mehr mit Druckflüssigkeit gespeist wird,
- eine Flüssigkeitsauffangplane (14), die mithilfe einer Spülklappe (15) mit dem Hydraulikmotor (7) verbunden ist

2. Vorrichtung nach Anspruch 1, **dadurch gekennzeichnet, dass** der hydropneumatische Speicher (9) ausgewählt ist aus der Gruppe, die einen Blasenspeicher, einen Membranspeicher und einen Kolbenspeicher umfasst.

3. Vorrichtung nach einem der Ansprüche 1 oder 2, **dadurch gekennzeichnet, dass** der Hydraulikmotor (7) eine Motorwelle (40) umfasst, die dafür ausgebildet ist, mithilfe von Eingriffsmitteln, welche mindestens einen von der Motorwelle (40) getragenen Freilauf (8) umfassen, mechanisch mit einer Getriebewelle (60) genannten Welle eines Hilfsgetriebes (13) des Turbomotors (6) verbunden zu werden.

4. Vorrichtung nach Anspruch 3, **dadurch gekennzeichnet, dass** die Eingriffsmittel weiter umfassen:
- eine erste Eingriffsstufe, die die Motorwelle (40) umfasst, welche ein auf dem Freilauf (8) montiertes Hauptritzel (41) und ein Pumpenritzel (42) genanntes Ritzel trägt,
- eine zweite Eingriffsstufe, die die Getriebewelle (60) umfasst, welche ein vom Hauptritzel (41) der ersten Eingriffsstufe in Eingriff genommenes Hauptritzel (61), und ein Pumpenritzel (62) genanntes Ritzel trägt,
- eine Zwischeneingriffsstufe, die eine Zwischenwelle (50) umfasst, welche ein Verbindungsritzel (52) trägt, das zwischen einer eingerückten Stellung, in der es zusammen mit den Pumpenritzeln (42, 62) der ersten und zweiten Stufe in Eingriff steht, und einer ausgerückten Stellung beweglich ist, in der es nicht mit den Pumpenritzeln (42, 62) interferiert.

5. Antriebssystem für einen mehrmotorigen Helikopter, welches Turbomotoren (6, 16) umfasst, die dafür ausgebildet sind, mit einem Kraftübertragungsgetriebe (22) verbunden zu werden,
**dadurch gekennzeichnet, dass** es umfasst:
- mindestens einen Hybrid-Turbomotor genannten Turbomotor (6, 16) aus den Turbomotoren, welcher in der Lage ist, während eines stabilisierten Fluges des Helikopters in mindestens einer Standby-Drehzahl zu laufen, wobei die anderen Turbomotoren während dieses stabilisierten Fluges alleine laufen,
- mindestens eine Notstartvorrichtung für einen Turbomotor nach einem der Ansprüche 1 bis 4, die dafür ausgebildet ist, diesen Hybrid-Turbomotor aus der Standby-Drehzahl holen und eine Nenndrehzahl genannte Drehzahl erreichen zu können, in der er dem Kraftübertragungsgetriebe eine mechanische Kraft zuführt.

6. System nach Anspruch 5, **dadurch gekennzeichnet, dass** es zwei Hybrid-Turbomotoren (6, 16) und zwei Notstartvorrichtungen nach einem der Ansprüche 1 bis 4 umfasst, wobei jeder Hybrid-Turbomotor mit einer Neustartvorrichtung verknüpft ist.

7. System nach Anspruch 5, **dadurch gekennzeichnet, dass** es zwei Hybrid-Turbomotoren (6, 16) und eine einzige Startvorrichtung nach einem der Ansprüche 1 bis 4 umfasst, welche zwei Hydraulikmotoren (7, 17) umfasst, die jeweils mit jedem Hybrid-Turbomotor (6, 16) verbunden sind, wobei das Hydraulikventil (11) ein Dreiwegeventil ist, das so gesteuert wird, dass es das Fluid zu dem Hydraulikmotor des Hybrid-Turbomotors hin lenkt, der neugestartet werden soll.

8. Helikopter, der ein Antriebssystem nach einem der Ansprüche 5 bis 7 umfasst.

## Claims

1. Emergency start-up device for a turboshaft engine (6) of a helicopter comprising:
- a hydraulic motor (7) which is suitable for being mechanically connected to said turboshaft engine (6) and is suitable for setting into rotation said engine to facilitate the start-up thereof,
- a hydropneumatic store (9) which is connected to said hydraulic motor (7) by means of a hydraulic circuit (10) for supplying pressurised liquid to said hydraulic motor (7),
**characterised in that** the device comprises:
- a hydraulic valve (11) which has controlled quick opening, is arranged on the hydraulic circuit (10) between said store (9) and said hydraulic motor (7), and is suitable for being placed on command at least in an open position in which the liquid can supply said hydraulic motor (7), thus facilitating a start-up of said turboshaft engine (6) when the device is used with said turboshaft engine (6), or in a closed position in which said hydraulic motor (7) is no longer supplied with pressurised liquid,
- a reservoir (14) for recovering liquid which is connected to said hydraulic motor (7) by means of a purge valve (15).

2. Device according to claim 1, **characterised in that** said hydropneumatic store (9) is selected from the group comprising a bladder-type store, a membrane-type store and a piston-type store.

3. Device according to either claim 1 or claim 2, **characterised in that** said hydraulic motor (7) comprises a propshaft (40) which is suitable for being mechanically connected to a shaft, referred to as a gearbox shaft (60), of an accessory gearbox (13) of said turboshaft engine (6) by meshing means comprising at least one free wheel (8) which is supported by said propshaft (40).

4. Device according to claim 3, **characterised in that** said meshing means further comprise:
- a first meshing stage comprising said propshaft (40) supporting a main pinion (41) which is mounted on said free wheel (8) and a pinion, referred to as a pumping pinion (42),
- a second meshing stage comprising said gearbox shaft (60) supporting a main pinion (61) which is meshed with said main pinion (41) from said first meshing stage, and a pinion, referred to as a pumping pinion (62),
- an intermediate meshing stage comprising an intermediate shaft (50) supporting a connection pinion (52) which is movable between an engaged position in which it is engaged together with said pumping pinions (42, 62) from the first and second stages, and a disengaged position in which it does not interfere with said pumping pinions (42, 62).

5. Propulsion system for a multi-engine helicopter comprising turboshaft engines (6, 16) which are suitable for being connected to a power transmission gearbox (22),
**characterised in that** it comprises:
- at least one turboshaft engine (6, 16) among said turboshaft engines, referred to as a hybrid turboshaft engine, which is capable of operating in at least one standby regime during a stabilised flight of the helicopter, the other turboshaft engines operating only during this stabilised flight,
- at least one emergency start-up device for a turboshaft engine according to any of claims 1 to 4 which is suitable for being able to take this hybrid turboshaft engine out of said standby regime and reach a regime, referred to as the rated regime, in which it supplies mechanical power to said power transmission gearbox.

6. System according to claim 5, **characterised in that** it comprises two hybrid turboshaft engines (6, 16) and two emergency start-up devices according to any of claims 1 to 4, each hybrid turboshaft engine being associated with a restart device.

7. System according to claim 5, **characterised in that** it comprises two hybrid turboshaft engines (6, 16) and a single start-up device according to any of claims 1 to 4 which comprises two hydraulic motors (7, 17) which are connected to each hybrid turboshaft engine (6, 16), respectively, said hydraulic valve (11) being a three-way valve which is controlled to orient the fluid towards said hydraulic motor of the hybrid turboshaft engine to be restarted.

8. Helicopter comprising a propulsion system according to any of claims 5 to 7.
